# EUROPEAN PATENT SPECIFICATION

(11) **EP 4 532 383 B1**
(45) Date of publication and mention of the grant of the patent: **29.07.2026**
(21) Application number: 23728804.8
(22) Date of filing: 31.05.2023
(51) Int. Cl.: B65H 19/12

(54) **LINE FOR PRODUCING TUBES MADE OF WEB-LIKE MATERIAL**
FERTIGUNGSSTRASSE ZUR HERSTELLUNG VON ROHREN AUS BAHNFÖRMIGEM MATERIAL
LIGNE DE PRODUCTION DE TUBES CONSTITUÉS DE MATÉRIAU DE TYPE BANDE

(30) Priority: 31.05.2022 IT 202200011525
(43) Date of publication of application: 09.04.2025
(73) Proprietor: Valmet Tissue Converting S.p.A., 55100 Lucca (IT)
(72) Inventor: MAZZACCHERINI, Graziano, 55016 Porcari (LU) (IT); GALOPPINI, Matteo, 55100 Lucca (IT)
(74) Representative: Mannucci, Michele
(86) International application number: PCT/EP2023/064598
(87) International publication number: WO 2023/232898

(56) References cited:
- EP-A1- 3 981 915
- EP-A2- 3 418 229
- WO-A1-2016/173851
- US-A1- 2017 101 281

## Description

### TECHNICAL FIELD

The present invention relates to improvements to machines and plants to produce tubes by winding one or more webs of web-like material around a forming spindle.

### BACKGROUND ART

In many industrial fields, the need to wind a continuous web material around tubular winding cores arises. For example, in the field of production of tissue paper rolls (such as toilet paper rolls, kitchen paper rolls and the like) it is known to wind a single- or multi-layer web around a tube or tubular winding core.

Frequently, these tubes or tubular winding cores are produced using cardboard webs which are wound around a forming spindle. The machines that form these tubes or tubular cores are referred to as "core winders" in the industry. Generally, a core winder winds one or more web-like materials, typically cardboard, around a forming spindle to form a continuous tube. This tube is cut into pieces, each of which forms a winding core. The core winders have systems for unwinding web-like materials, referred to as unwinders, which supply the webs of material, unwound from reels, towards the forming spindle. The reels consist of a core on which the web-like material is wound, for example a cardboard strip. Whenever a reel runs out, it must be removed from the unwinder and replaced with a new reel. These operations are typically done by hand by an operator.

Similar processes are used to form cylindrical containers, for example for packaging food products.

Examples of core winders of current state of the art are disclosed in US7695420, US7452318, US20100204031, US20080009399.

EP3981915 discloses a machine for manufacturing tubes by helically winding three strips of overlapping and staggered strips of web material. The web reels are supported by mandrels carried by a stationary unwinding structure.

EP3418229 discloses a system for unwinding reels of web-like material. The system comprises anthropomorphic-arm robots which pick up single reels from a stack and which support the individual reel in an unwinding position until exhaustion thereof. Each robot therefore represents at the same time a member for picking up the reels and a support system for the reels during unwinding.

WO2016/173851 discloses a system for unwinding large parent reels of a plastic film to feed a production line. A robot loads the parent reels onto stationary unwinding spindles.

Managing the consumables used by these machines is often cumbersome and burdensome for production line personnel. Furthermore, the operations for removing the exhausted reel and loading the new reel is carried out manually, requesting the operator to handle heavy loads. As a matter of fact, new reels can weigh up to 100kg.

Once loaded onto the core winder, the cardboard reels run out very fast, usually in less than half an hour and in some cases even after a quarter of an hour. This results in very frequent replacements, making the work of the operator working on the core winder even more tiring and more dangerous. Lastly, the repetitive nature of the work and dangerousness inevitably also lead to a drop in productivity, as cardboard reels are often incorrectly loaded on the unwinder and incorrectly prepared for unwinding, causing the core winder to jam and therefore to stop.

Therefore, the need exists to provide a line to produce tubes by winding web-like materials, which fully or partially overcomes the drawbacks of existing lines.

### SUMMARY

In order to overcome fully or partly the drawbacks of the prior art, a line for producing tubes made of web-like material is provided, comprising a core winder, at least a first unwinder comprising a rotary device on which a first spindle and a second spindle are arranged; and a robot adapted to load reels of web-like material onto the unwinder and remove exhausted reels from the unwinder. As will be explained later on, the rotary device is configured such that that the rotation thereof exchanges the positions of the first and second mandrels. This facilitates the loading operations of the reels by the robot.

Further features and embodiments of line for producing tubes or winding cores according to the invention are described below and set forth in the attached claims.

### BRIEF DESCRIPTION OF THE DRAWINGS

The invention will be clearer from the description and the attached drawings, which illustrate exemplary and non-limiting embodiments of the invention . More particularly, in the drawings:
Figs.1A, 1B show a schematic lateral view of a line for producing tubes or winding cores;
Fig.2 shows a plan view according to line II-II of Fig.1A,
Fig.3 shows an enlargement of the robot head of Figs. 1A and 2;
Figs. 4A to 11B show an operational sequence of loading and removing reels from the unwinder;
Figs.12 and 13 show an alternative embodiment of the step for applying an adhesive to the reel;
Figs.14 and 15 show a further alternative embodiment of the step for applying an adhesive to the reel.

### DETAILED DESCRIPTION

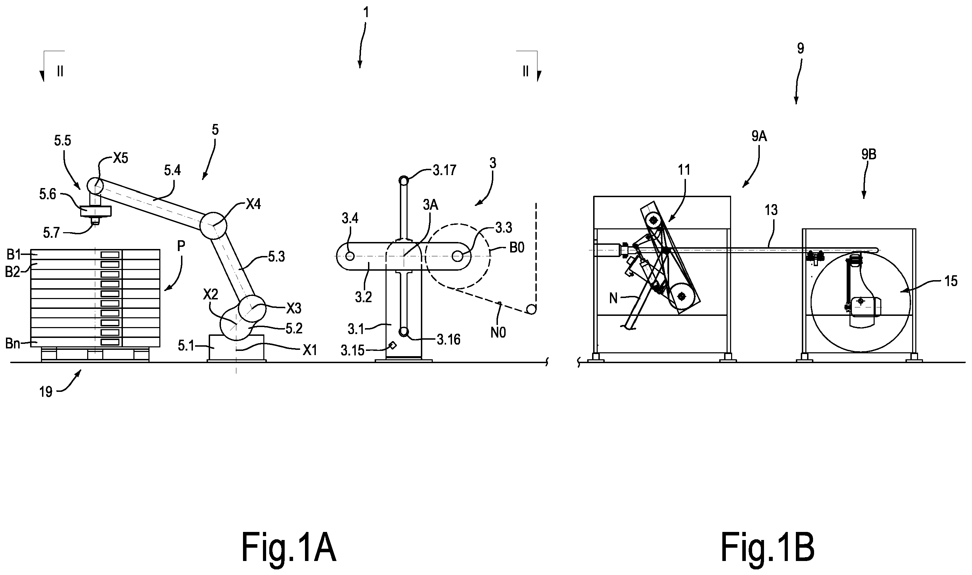

Figs.1A, 1B schematically show a side view of a line for producing tubes or tubular cardboard cores through a core winder in which there is incorporated a robot, or manipulator, for handling the cardboard reels. More particularly, Fig. 1A shows the initial part of the production line, labeled with 1 as a whole. In the initial part of the line 1 an unwinder 3 and a numerical control manipulator, for example a robot, generally indicated with 5, are arranged in combination. The robot 5 can be a robot consisting of or comprising a robotic arm 5, for example an anthropomorphic robotic arm. An anthropomorphic robotic arm can generally be an open kinematic manipulator. In some cases, the robotic arm may comprise a plurality of numerical control movement axes to carry out a complex movement which enables to grip and manipulate reels from a stack, the loading thereof on the unwinder and removal of the exhausted reels from the unwinder. For example, the robotic arm can be an arm with three numerical control axes and a spherical wrist, that is a terminal end that can be rotated around a spherical joint. The terminal end can include an end effector.

Fig.1B schematically shows the final part of the line 1, comprising the core winder 9. The latter can be configured in any way. In the illustrated embodiment, a core winder is provided, which produces tubes by winding a single web-like material, i.e. a single cardboard web helically wound around a forming spindle. In other embodiments, the tube can be manufactured by helically winding two cardboard webs staggered with respect to each other. The possibility of producing tubes by longitudinally winding two or more webs around a forming spindle cannot be ruled out.

Given that the structure of core winder 9 is known and it can be any, it will not be described in detail. Generally speaking, in the shown embodiment, the core winder 9 comprises a first section 9A with a winding head 11 which receives the web-like material represented in this case by a single cardboard web N and winds it, using a belt or other suitable winding member, around a forming spindle 13. The forming spindle 13 extends towards a second section 9B of the core winder 9, where a cutting assembly 15 is arranged. The tube is continuously formed around the forming spindle 13 and is divided into tubular pieces, for example individual tubular winding cores, using the cutting assembly 15. As described hereinafter, the cutting assembly may comprise a serrated blade mounted on a rotary arm but any other cutting device, for example a pressure cutting device, may be used. Examples of these types of core winders are disclosed in EP1631425, WO95/10399, EP2203303.

Returning to the initial section of line 1, the anthropomorphic arm 5 is configured to pick up individual reels B1, B2, ... Bn of web-like material, for example cardboard web, from a stack P positioned in a pick-up station 19. In the stack P, the reels B1, B2 ... Bn are stacked with the axis thereof vertically oriented, i.e. orthogonal to a support surface, for example a pallet.

In the present description "vertical" means a direction parallel to the direction of the force of gravity and "horizontal" means a direction orthogonal to the vertical direction.

In the illustrated embodiment, the robot 5 comprises a base 5.1, three arms 5.2, 5.3 and 5.4 pivoted to each other and a head 5.5. Five numerical control rotary axes, around which the various components of the anthropomorphic robot 5 can move to perform the movements and operations described below, are indicated with X1, X2, X3, X4 and X5.

The head 5.5 of the robot 5 comprises an ejector 5.6 and a spindle 5.7. The spindle 5.7 may be an expandable spindle and is configured to be inserted into an axial hole of the reel B1, B2, ... Bn to be manipulated, to engage it from the center. The ejector 5.6 is configured to eject the reel engaged by the spindle 5.7 from the spindle 5.7.

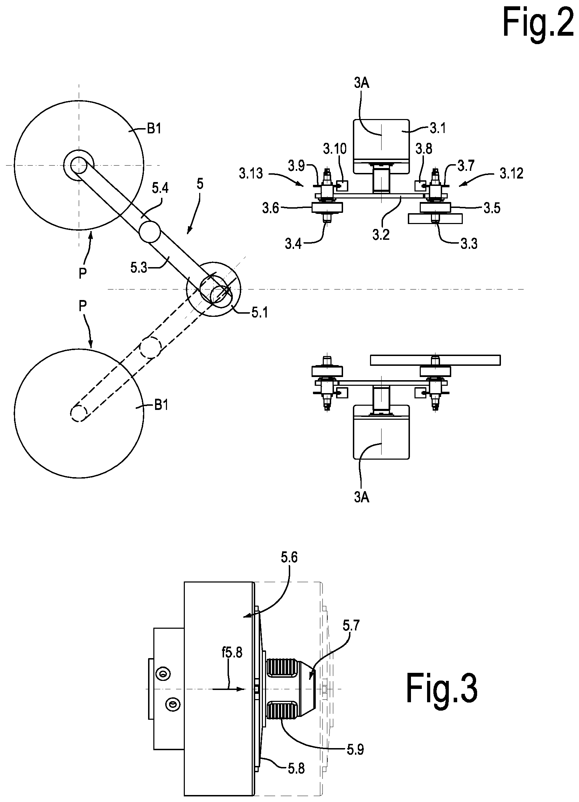

As can be seen in the plan view of Fig.2, the robot 5 can be designed to serve two separate unwinders, both indicated with 3, which can supply the cardboard web to two separate core winders. Basically, in this case the robot 5 serves two tube production lines. In this case, advantageously, two pick-up stations 19 are preferably provided, where two stacks of reels B1, B2, ...Bn are placed.

In other embodiments, one or each line may comprise two unwinders arranged side by side so that they can be loaded by the same robot 5. This is useful when core winder 9 produces tubes by winding two or more webs instead of just one. Exemplary embodiments of this kin will be described later on.

Each unwinder 3 comprises a base 3.1, on which a rotary device 3.2 is rotatably mounted. The rotation axis of the rotary device 3.2 is indicated with 3A. A first spindle 3.3 and a second spindle 3.4 are arranged on the rotary device 3.2.

As visible in particular in the plan view of Fig.2, a respective ejector 3.5, 3.6 is associated with each spindle 3.3, 3.4. Furthermore, each spindle 3.3, 3.4 is associated with a brake 3.12, 3.13, which comprises a disc 3.7, 3.9 and a jaw 3.8, 3.10. A sensor for detecting the leading edge of each new reel B1, B2, ... Bn which is loaded on the spindle of the unwinder which is found on the side of the sensor 3.15, that is on the spindle 3.4 in the position of Fig.1A, is indicated with 3.15 in Fig.1A.

In addition to the spindles 3.3 and 3.4, the rotary device 3.2 carries two guide rollers 3.16 and 3.17 for correctly guiding the cardboard web in the various reel change steps, as described hereinafter.

The three spindles 5.7, 3.3, 3.4 may be identical to each other and configured as shown in Fig.3 in a lateral view for the spindle 5.7 of the head 5.5 of the robot 5. Expandable elements, for example pneumatically controlled elements, of the spindle 5.7, which are used to grip the inner surface of the core or an axial hole of the reels B1, B2, ... Bn, are indicated with 5.9. An annular element movable according to arrow f58 parallel to the axis of the spindle 5.7 of the ejector 5.6, is indicated with 5.8. The movement of the movable annular element is used to eject the reels from the spindle.

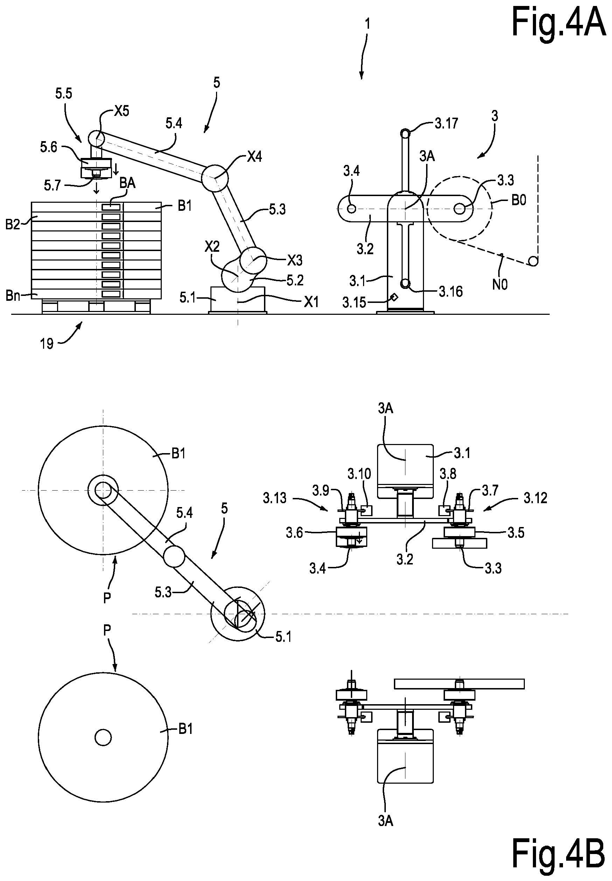

Figs. 4A to 10B show a sequence for replacing an exhausted reel made of web-like material (cardboard web) with a new reel using robot 5 of the line 1 described so far.

Figs.4A and 4B respectively show, in a side view and a plan view, the step in which a reel B0 loaded on the spindle 3.3 is exhausted, while the spindle 3.4 is empty and ready to receive the new reel B1 at the top of the stack P, which will be picked up by the robot 5. In Figs. 4A, 4B, the robot 5 is arranged with the spindle 5.7 thereof in the position overlying the stack P and coaxial to the reels B1, B2, .... Bn.

In this step, the robot can perform an operation for centering the head 5.5 with respect to the stack P, using a centering system, for example a laser centering system carried by the head 5.5. From the position of Fig.4A, when the head 5.5 is lowered in the vertical direction, the spindle 5.7 of the robot is inserted into the axial hole of reel B1 and the expandable elements 5.9 are expanded to engage reel B1. The movement for inserting the spindle entails a simultaneous recession of the ejector 5.6.

In this step, the ejector 3.6 associated with the empty spindle 3.4 may be in the extracted position, to ensure that the spindle 3.4 is free of residues of the previous reels.

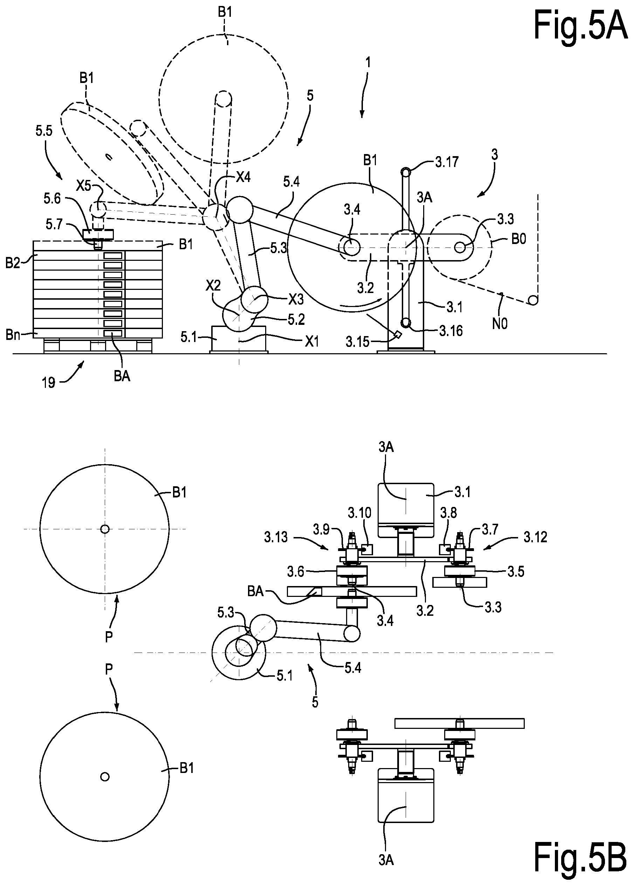

Figs. 5A, 5B show, in views similar to Figs. 4A, 4B, the complex movement with which the robot picks up the reel B1 from stack P and carries it in front of the spindle 3.4 of the unwinder, by rotating the reel from a horizontal lying position, with the axis oriented in a vertical direction, to a vertical lying position, with the axis oriented in a horizontal direction and coaxial to the axis of the spindle 3.4. The movement of the robot is controlled so that the time in which the reel B1 is maintained with its axis oriented vertically (horizontal lying of the reel) is minimal. As a matter of fact, due to the small axial dimension of the reel, when the latter is lifted from the underlying reel B2, in the stack P, the turns of the wound web tend to slide over each other, causing the deformation of the reel with the risk that it unwinds completely.

In order to avoid this drawback, in advantageous embodiments, the robot is controlled in such a way that the first movement performed is that of gradual rotation of the reel B1 as soon as the lifting movement from the stack P starts. Subsequently, the translation movement up to the position coaxial with the spindle 3.4 of the unwinder spindle 3 is completed.

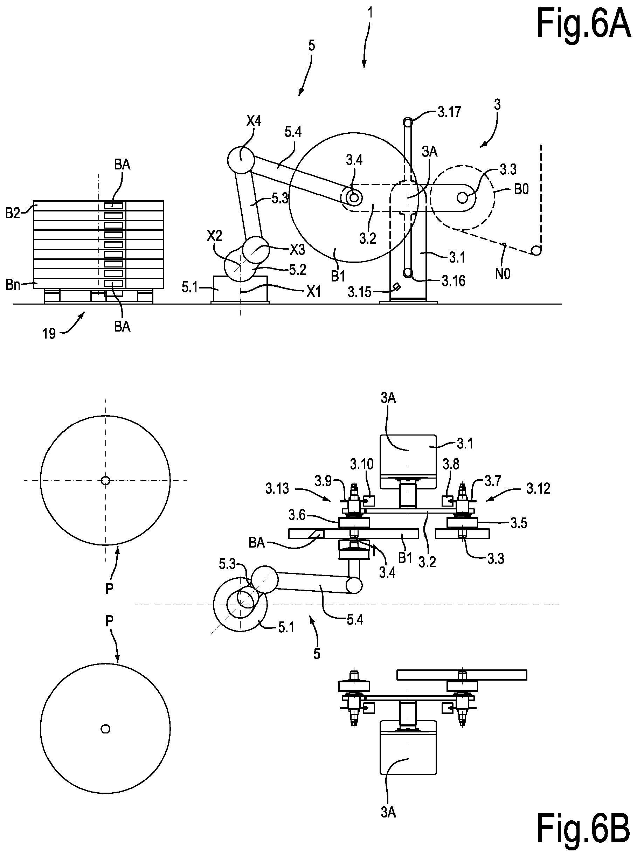

Figs. 6A, 6B show the step in which the reel B1 is transferred from the spindle 5.7 of the robot 5 to the spindle 3.4 of the unwinder. This transfer is obtained by activating and translating the ejector 5.6 of the head 5.5 of the robot 5 outwards, after deactivating and retracting the expandable elements 5.9, and by moving the ejector 3.6 of the spindle 3.4 back, if not already moved back.

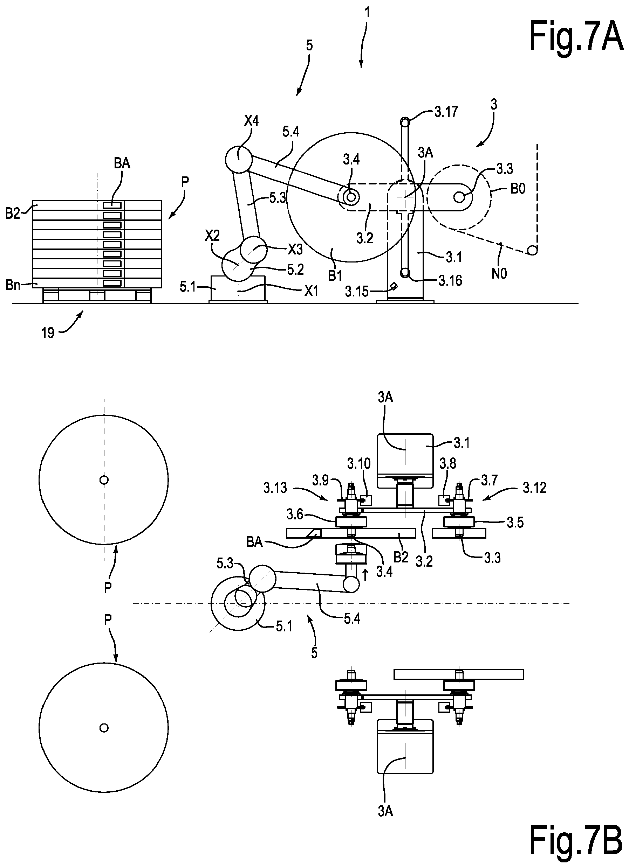

The subsequent Figs. 7A, 7B show the step of moving the head 5.5 of the robot 5 away from spindle 3.4 of the unwinder 3, with reel B1 engaged to the spindle 3.4, by expanding expandable elements of the spindle 3.4 similar to elements 5.9 (Fig.3).

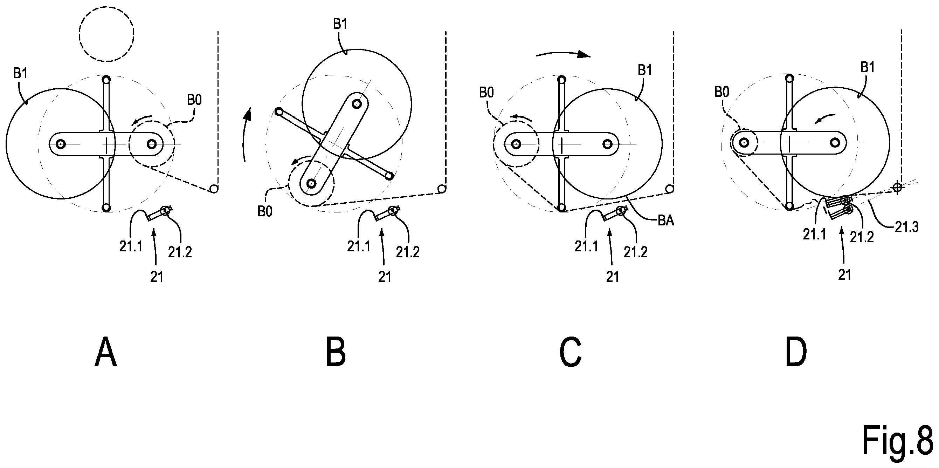

Figs.8A-8D show, in a side view, a 180° rotation of the rotary device 3.2 of the unwinder 3, with which the positions of the spindles 3.3 and 3.4 are exchanged. In this step, the guide roller 3.17 is used to guide the web N1 correctly and to form a path of web N which extends under the new reel B1 just loaded on the unwinder 3. This portion of the web path N1 is found between the new reel B1 and a cutting and splicing device 21, which is used to cut the web N0 coming from the finishing reel.

Prior to performing the 180° rotation of the rotary device 3.2, the reel B1 may be positioned angularly so as to carry the leading edge of the web N1 wound thereon to a predetermined angular position. This rotation may be done by hand, or by providing for a motor that drives the spindle 3.4 in rotation. Once the desired angular position has been achieved, the brake 3.13 may be activated to lock the angular position of reel B1 with respect to the rotary device 3.2. The desired position can be detected using the sensor 3.15.

In another embodiment, the angular rotation of reel B1 may be performed by the robot 5 before transferring it from the spindle 5.7 to the spindle 3.4. Basically, before the insertion step of Figs. 6A, 6B, the robot 5 rotates the spindle 5.7 until the leading edge of the new reel is detected. Subsequently the rotation of the reel is locked and the reel is transferred - as described above - to the spindle 3.4, with the advantage of having already oriented it correctly. Similarly, once the desired angular position has been achieved, the brake 3.13 may be activated to lock the angular position of reel B1 with respect to the rotary device 3.2, before performing the 180° rotation of the rotary device 3.2.

In the embodiment described herein, the reels B1, B2, ... Bn are provided with a double-sided adhesive tape BA at the leading edge of the wound web. The double-sided adhesive tape BA on the one hand serves to keep the leading edge closed and on the other hand to adhere the leading edge of the web N1 to the trailing edge or tail of the web N0 after cutting as described below with reference to the sequence of Figs. 8A-8D. In this case, during the rotation of the reel B1, through the robot 5 the sensor 3.15 can be used to detect double-sided adhesive tape BA.

As shown in Figs. 8A, 8D, the cutting device 21, comprises a blade 21.1 and a pressure roller 21.2, mounted on a pivoting arm schematically shown in 21.3 in Fig.8D. Figs.8A, 8B, 8C illustrate the rotation of the rotary device 3.2. The angular position in which the double-sided adhesive tape BA is placed is indicated with BA in Fig.8C and 8D. As shown in Fig.8D, pivoting of the arm 21.3 causes the blade 21.1 to cut the web N0. At the same time, the pressure roller 21.2 presses the tail of the web N0, generated by the cut, onto the double-sided adhesive tape BA which is applied at the leading edge of the web N1 wound on reel B1. The pressure of roller 21.2 causes the tail of the web N0 and of the leading edge of the web N1 to adhere to each other. The subsequent pulling of the remainder of the web N0 starts the unwinding of the web N1.

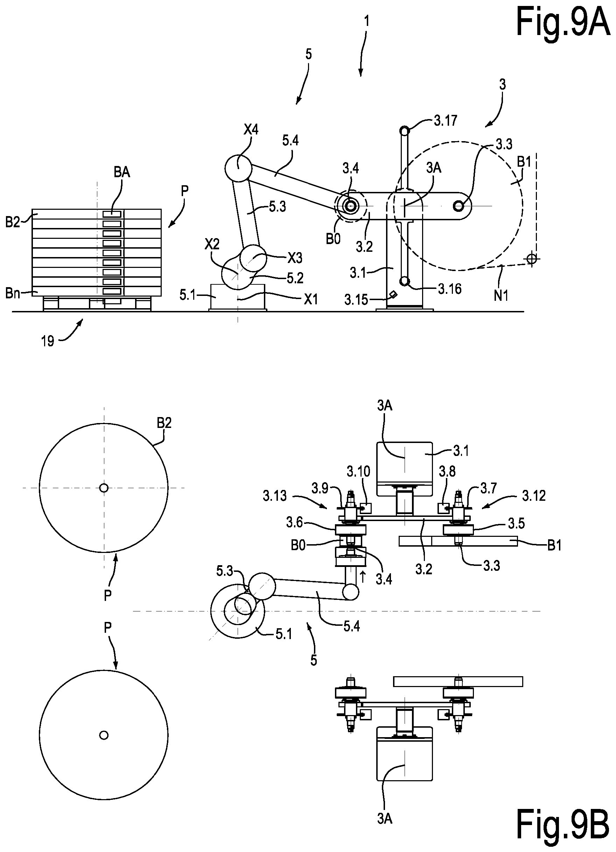

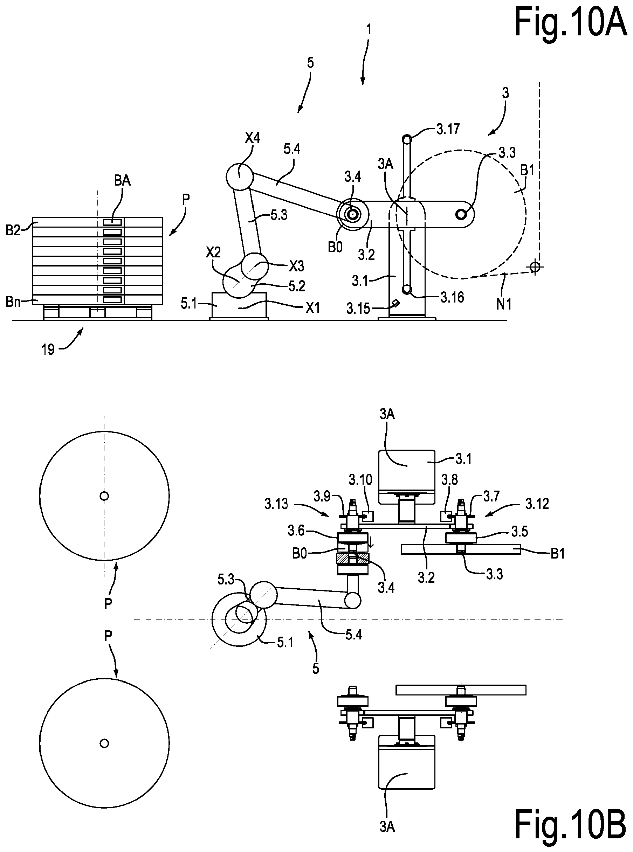

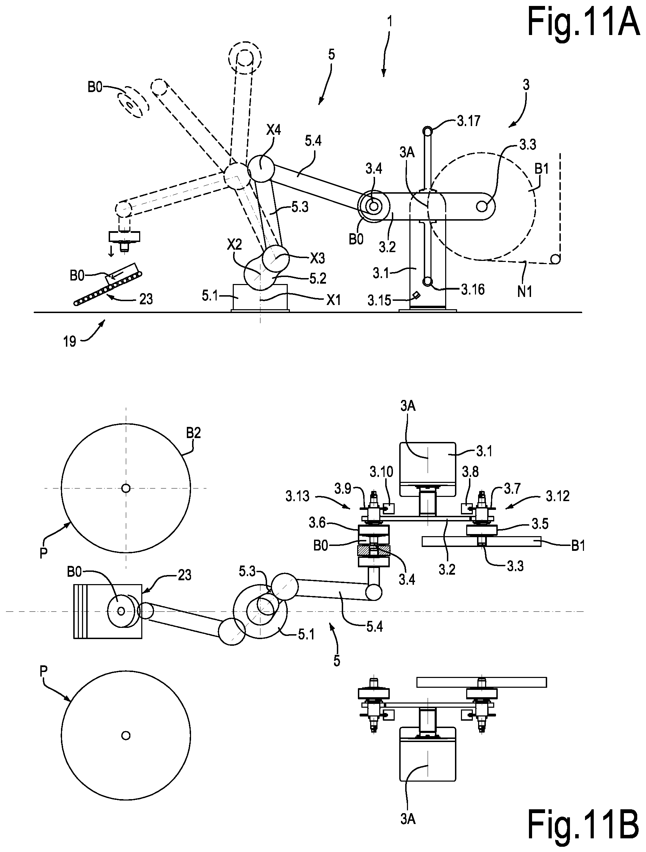

The next Figs. 9A, 9B and 10A, 10B illustrate the step where the spindle 5.7 is aligned with the spindle 3.3 on which the remainder of the reel B0 residue is found. Using the ejector 3.5, the residual reel B0 is transferred on the spindle 5.7 of the robot 5 to be transferred by the latter to an accumulation area 23, see Fig.11A, 11B where the movement for transferring the residual reel B0 to the accumulation zone 23 using the robot 5 is shown.

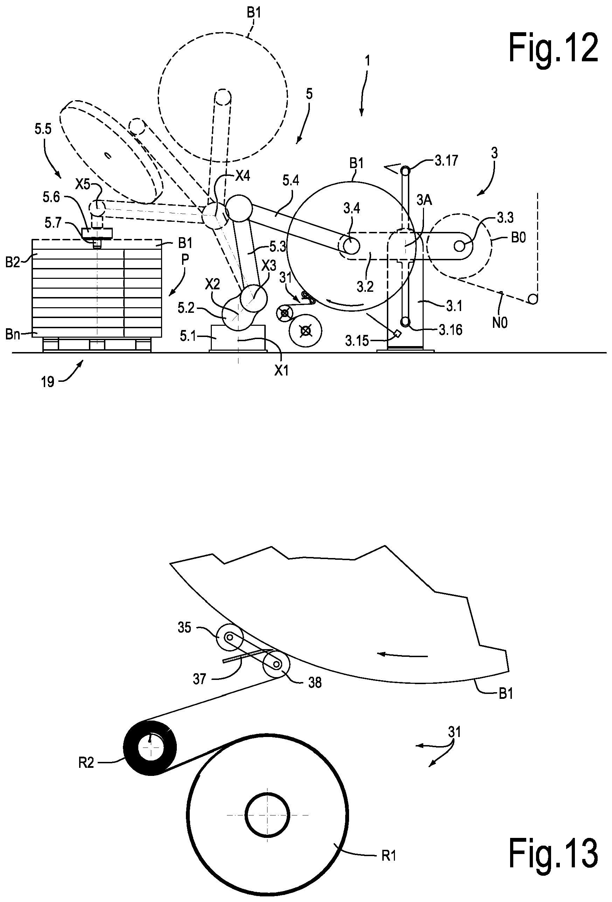

The double-sided adhesive tape BA may be applied to reels B1, B2, ...Bn not beforehand but it may be applied once the new reel has been already loaded onto the spindle of the unwinder 3, prior to rotating the rotary device 3.2. An embodiment of this type is shown in the Figs. 12 and 13. Fig.12 schematically shows the side view of unwinder 3 and of the robot 5 in the step for loading the new reel B1 on the spindle 3.4. A device for applying an adhesive in form of a device for applying a double-sided adhesive tape BA is indicated with 31. Fig.13 shows an enlargement of the device for applying the double-sided adhesive tape.

The application is carried out at the desired point, i.e. at the head of the web N1 wound on the reel B1, which can be detected by the sensor 3.15 as described above.

The device for applying the double-sided adhesive tape 31 receives a roll of double-sided tape R1 from which the double-sided adhesive tape BA is unwound, separating a protection liner, which is wound on a roll R2, therefrom. Two rollers 33, 35 and a cutting blade 37 allow to apply a portion of double-sided adhesive tape to the leading edge or head of the web N1 forming the reel B.

The cycle for replacing an exhausted reel with a new reel is substantially the same as described in Figs. 1 to 11.

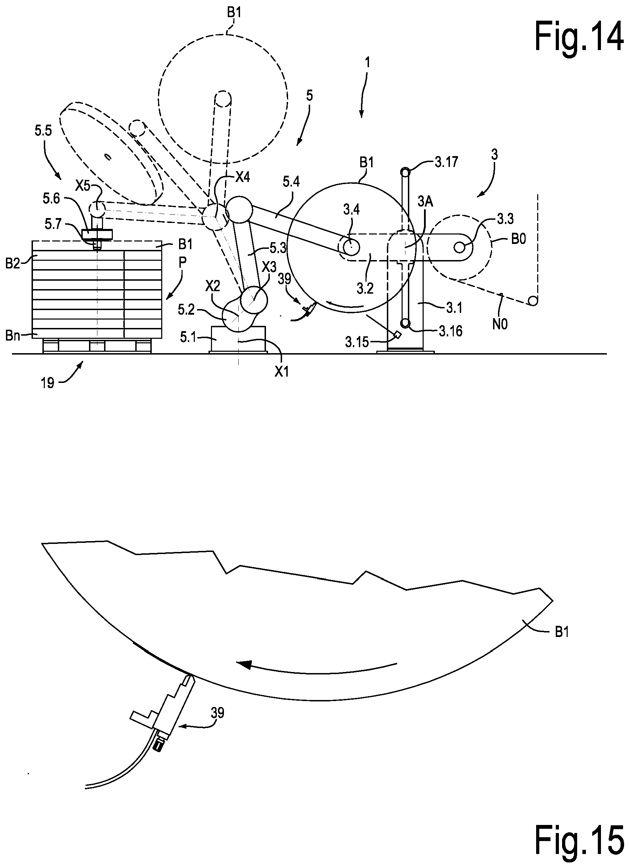

Instead of a device for applying a double-sided adhesive tape, the unwinder 3 may comprise a liquid adhesive dispenser. Application may be carried out using spray nozzles, or in another manner, for example with roller applicators. Fig. 14 shows a side view of the initial part of the line 1, comprising the unwinder 3 and the robot 5, in the step for loading a reel B1 on the spindle free of the unwinder 3. In this embodiment, the unwinder 3 comprises an adhesive dispenser in form of a coating gun 39. See in particular also the enlargement of Fig.15. The adhesive is applied to the area of the reel where the leading edge is found, detected by the sensor 3.15.

The stack P is positioned, with respect to the base 5.1 of the robot, in a predetermined position so that the robot 5 can always perform the same trajectory for loading the reels B1, B2, ... Bn. This position may not always be accurate, either because the operator does not position the stack P with the required precision, or also because the stack P may shift slightly due to shocks or simply because the stacking of the reels B1, B2, ... Bn on the transportation pallet is not always exactly the same, i.e. the position of reels B1, B2, ... Bn with respect to the transportation pallet may differ from pallet to pallet. In the latter case, there may be provided for alignment systems consisting of a V-shaped blade, in a fixed position with respect to the base 5.1 of the robot 5, to which the outer lateral surface of the stack P is approached. This allows to significantly mitigate a positioning error. Also in this case, it is however preferable to provide for a step for centering the head 5.5 with respect to the stack P of the reels B1, B2, ... Bn.

As mentioned above, the centering step can be carried out by the robot 5, for example by means of a laser centering system carried by the head 5.5. In this case, starting from a predetermined point, the head of the laser 5.5 moves until it detects - through the laser - a first edge point of the core of the first upper reel of the stack P. Subsequently, the head of the robot 5.5 translates along a chord of the core of the reel (i.e. a chord of the circumferential edge of the tubular core) until a second point in the circumferential edge of the core is detected. Once the two points that determine the chord have been detected, the head of the robot 5.5 is positioned half-way the chord. Subsequently, the head of the robot 5.5 translates in a direction orthogonal to the chord, so as to pass through the center of the core of the reel until a third point is detected. Once three points have been detected, the theoretical center of the reel can be calculated, or the head 5.5 of the robot 5 can be translated backwards along the direction orthogonal to the previously detected chord in order to detect, through the laser sensor, a fourth point on the edge of core of the reel. The third point and the fourth point define the diameter of the reel. The median point of the straight line segment which joins the third point and the fourth point determine the center of the reel.

Alternatively, a centering system other than a laser sensor may be provided, including a video camera which detects - using an algorithm - the center of the top reel of the stack P and communicates it to the central control unit of the robot 5.

The centering step may preferably be carried out only once the pallet of reels is positioned with respect to the base of the robot 5.1. Alternatively, if need be, a centering operation may be carried for each reel to be loaded, or whenever an operator deems it necessary.

In this context, the robot 5 is shown with an open kinematics robot with 5 axes. In alternative embodiments, the anthropomorphic robot can be used. For example, a robot with 6 axes, that is a robot with 3 axes for positioning in space plus three axes for orienting the head 5.5 as desired, can be used. Robots with fewer axes can also be used should the movements for loading and removing the reels require easier trajectories.

In a further modified embodiment, the cutting device 21 may comprise only the blade 21.1 but not the pressure roller 21.2, separating the cutting step from the splicing step. This requires coordinating two different actuators to operate the cutting step and the splicing step respectively.

In order to avoid malfunctions, when changing the reel, the head 5.5 of the robot may also comprise a load sensor, that is a weight sensor, for example a load cell or other suitable sensors, for measuring the weight of the new reel being lifted. This allows to detect the case where two adjacently stacked reels remain coupled, that is attached to each other during the lifting step, and the change procedure can be stopped by generating an alarm or by performing a procedure that tries to split the two reels.

In some embodiments, a sensor, for example a laser sensor, can be provided for both spindles 3.3 and 3.4, respectively, for measuring the diameter of the reel being unwound. This information can be used to detect when to change the exhausted reel with the new reel, i.e. when to actuate the pivoting arm 21.3. The diameter of the exhausting reel can also be used to detect when to rotate the rotary device 3.2 by 180°. Lastly, the diameter of the reel being unwound can be used to detect when to start loading the new reel on the free spindle. As a matter of fact, in order to reduce the overall dimensions of the rotary device 3.2, the distance between the two spindles 3.3 and 3.4 may be smaller than the sum of the diameters of the new reels. Therefore, in this case, one has to wait until the reel being unwound has reached a predetermined diameter before loading a new reel.

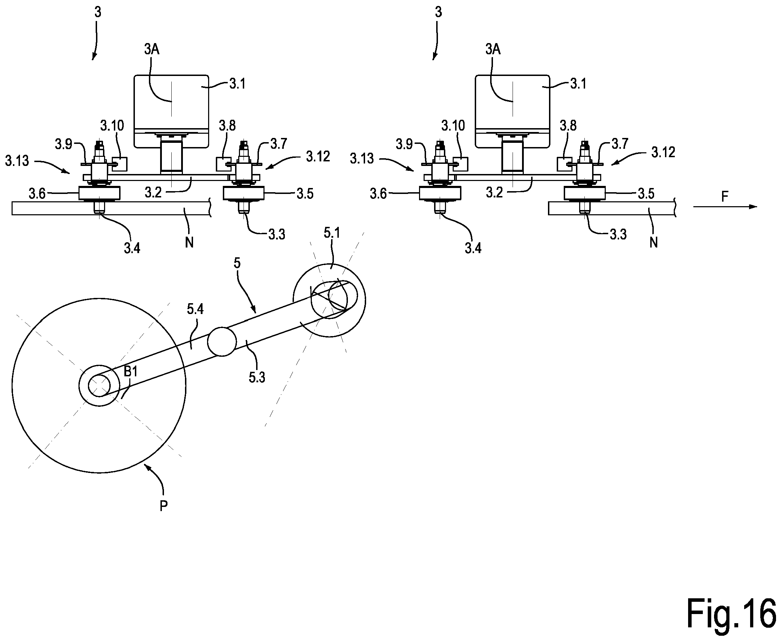

Figs.16, 17 and 18 show plan views similar to the view of Fig.2, of embodiments in which several webs N are fed to a single line and therefore to a single core winder 9. In the illustrated embodiments to the core winder 9 (not shown in Figs. 16, 17, 18; see Figs. 1A, 1B) two webs N are fed for each core winder. In other embodiments it is possible to feed more than two webs N to the single core winder.

In each of Figs. 16, 17 and 18 a first unwinder and a second unwinder are provided placed side by side and served by a single robot 5. In other words, the reciprocal position of the two unwinders which feed two webs N to the same core winder is such that the same robot 5 can load reels onto the mandrels of both unwinders.

The first unwinder and the second unwinder can be identical to each other, i.e. they can have the same components to perform the same functions. Each of the two unwinders can therefore be configured as previously described for unwinder 3.

More specifically, in Fig. 16 the two unwinders 3 are placed side by side and placed one after the other in the direction F of advancement of the webs N towards the core winder 9.

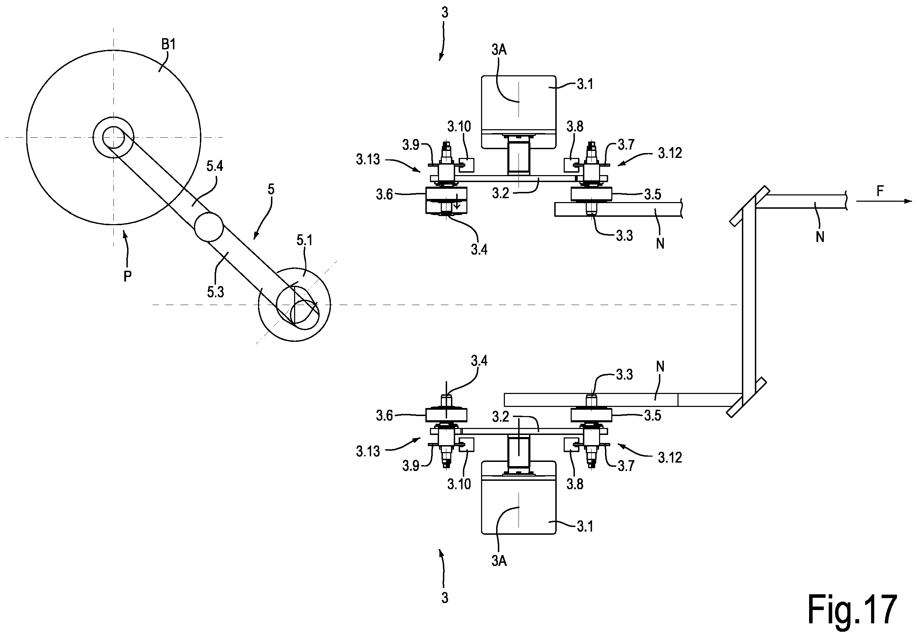

In Fig.17 the two unwinders 3 are placed side by side and one in front of the other. In Fig.17 the position is such that the rotation axes 3A of the two respective rotating devices 3.2 coincide, but this reciprocal position is not binding. The two axes of rotation 3A of the two unwinders can also be staggered, for example remaining parallel. In other cases, the two rotation axes of the rotating devices 3.2 can also be non-parallel. In Fig.17 the webs N are fed in the direction F. Deviating members 41 can be placed along the path of one of the two webs, which bring the trajectories of the two webs N closer together.

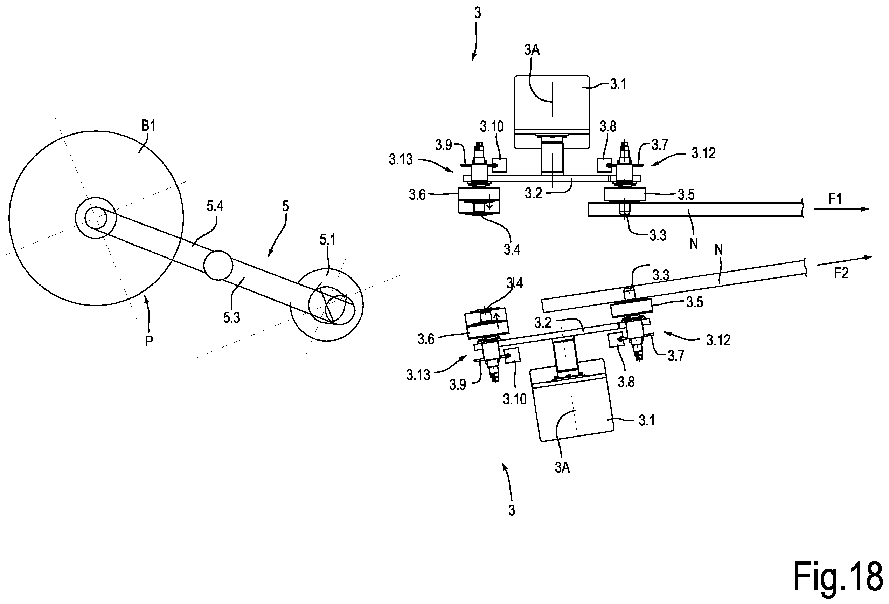

In Fig.18 the two unwinders 3 are placed side by side with different inclinations, i.e. with rotation axes 3A of the respective rotating devices 3.2 inclined to each other rather than parallel, so that the trajectories (arrows F1, F2) of the two webs N converge towards the core winder 9. In this way the use of deflector members 41 is made superfluous.

In all cases, a single robot 5 can load the reels B onto the mandrels 3.3, 33.4 of both unwinders 3.

## Claims

1. A line (1) for producing tubes made of web-like material, the line comprising:
a core winder (9);
at least a first unwinder (3) comprising a rotary device (3.2) on which a first spindle (3.3) and a second spindle (3.4) are arranged; wherein the first unwinder is arranged upstream of the core winder (9) along a path for supplying a web-like material to the core winder; wherein the rotary device of the first unwinder is adapted to rotate about an axis of rotation (3A) to exchange the position of the first mandrel and of the second mandrel, the line **characterised by**
a robot (5) adapted to load reels (B1, B2 ... Bn) of web-like material onto the first unwinder and remove exhausted reels from the first unwinder; wherein the robot comprises a head (5.5) adapted to engage the reels from a stack of awaiting reels and transfer them to the first spindle or to the second spindle and to pick up exhausted reels from the first spindle or from the second spindle.

2. The line of claim 1, wherein the robot comprises an anthropomorphic arm (5.2, 5.3, 5.4) with a plurality of rotation axes.

3. The line of claim 1 or 2, wherein each of said first and second spindle comprises an ejector (3.5, 3.6) for ejecting the exhausted reels from the spindle.

4. The line (1) of one or more of the preceding claims, further comprises a pick-up station (19), in which a stack (P) of waiting reels (B1, B2 ... Bn) is positioned with the axis thereof oriented vertically; and wherein the robot is adapted to rotate reels taken from the stack from a horizontal lying position, with the axis oriented in a vertical direction, to a vertical lying position, with the axis oriented in a horizontal direction and coaxial to the axis of the spindle..

5. The line of one or more of the preceding claims, wherein the robot head comprises an ejector (5.6) for ejecting the reels from the robot head

6. The line of one or more of the preceding claims, wherein each of said first and second spindle (3.3, 3.4) comprises a brake (3.12, 3.13) for braking the rotation of the respective spindle.

7. The line (1) of one or more of the preceding claims, wherein the first unwinder comprises a cutting and splicing member (21) adapted to cut a web-like material coming from an exhausted reel arranged on one of said first mandrel and second mandrel, forming a tail edge of the web-like material and splicing the tail edge to a leading edge of a web-like material of a new reel arranged on the other of said first spindle and second spindle.

8. The line of claim 7, wherein the cutting and splicing member comprises a cutting blade (21.1) and a pressure roller (21.2).

9. The line (1) of one or more of the preceding claims, wherein the first unwinder comprises an adhesive applicator (31) for the mutual joining between a tail edge of a web-like material coming from a reel about to be exhausted and a leading edge of a web-like material coming from a new reel.

10. The line (1) of claim 9, wherein the adhesive applicator (31) is selected from the group comprising: a liquid adhesive dispenser; a double-sided adhesive tape applicator.

11. The line (1) of one or more of the preceding claims, wherein the first unwinder comprises a device (3.15) for detecting a leading edge of a new reel

12. The line (1) of claim 11, wherein in order to detect the leading edge, said new reel is installed on one of said first and second spindle (3.3, 3.4) or it is supported by the robot head (5).

13. The line of one or more of the preceding claims, wherein the robot head (5) comprises a pick-up spindle (5.7) adapted to be inserted in a hole of a reel to be handied, and a centering device for centering the head with respect to a hole of a reel to be picked up.

14. The line (1) of one or more of the preceding claims, wherein the robot head comprises a sensor, preferably a weight sensor, for detecting the number of reels engaged by the robot head.

15. The line (1) of one or more of the preceding claims, comprising a second unwinder having a second rotating device, on which a third mandrel and a fourth mandrel are arranged; wherein the second rotary device is adapted to rotate about a second axis of rotation to exchange the position of the third mandrel and of the fourth mandrel; wherein the first unwinder and the second unwinder are placed near to one another, i.e. side by side, so that they can both be loaded by the robot; and wherein the first unwinder and the second unwinder are preferably equal to one another.

## Patentansprüche

1. Produktionslinie (1) für Rohre aus bahnförmigem Material, wobei die Produktionslinie umfasst:
einen Kern-Wickler (9);
mindestens einen ersten Abwickler (3), die eine Drehvorrichtung (3.2) umfasst, auf der eine erste Spindel (3.3) und eine zweite Spindel (3.4) angeordnet sind; wobei der erste Abwickler entlang eines Weges zur Zuführung eines bahnförmigen Materials zum Kernwickler stromaufwärts des Kern-Wicklers (9) angeordnet ist;
wobei die Drehvorrichtung des ersten Abwicklers ausgelegt ist, sich um einer Drehachse (3A) zu drehen, um die Position des ersten Dorns und des zweiten Dorns zu vertauschen, wobei die Produktionslinie **gekennzeichnet ist durch** einen Roboter (5), der ausgelegt ist, Rollen (B1, B2 ... Bn) aus bahnförmigem Material auf den ersten Abwickler zu laden und aufgebrauchte Rollen vom ersten Abwickler zu entfernen; wobei der Roboter einen Kopf (5.5) umfasst, der ausgelegt ist, die Rollen aus einem Stapel wartender Rollen in Einsatz zu nehmen und sie zur ersten Spindel oder zur zweiten Spindel zu befördern sowie aufgebrauchte Rollen von der ersten Spindel oder von der zweiten Spindel abzuholen.

2. Produktionslinie nach Anspruch 1, wobei der Roboter einen anthropomorphen Arm (5.2, 5.3, 5.4) mit mehreren Drehachsen umfasst.

3. Produktionslinie nach Anspruch 1 oder 2, wobei sowohl die erste als auch die zweite Spindel einen Auswerfer (3.5, 3.6) zum Auswerfen der aufgebrauchten Rollen aus der Spindel umfasst.

4. Produktionslinie (1) nach einem oder mehreren der vorstehenden Ansprüche ferner umfassend
eine Aufnahmestation (19), in der ein Stapel (P) aus wartenden Rollen (B1, B2 ... Bn) mit vertikal ausgerichteter Achse positioniert ist; und wobei der Roboter ausgelegt ist, aus dem Stapel entnommene Rollen aus einer horizontal liegenden Position, wobei die Achse in vertikaler Richtung ausgerichtet ist, in eine vertikal liegende Position zu drehen, wobei die Achse in horizontaler Richtung ausgerichtet und koaxial zur Achse der Spindel ist.

5. Produktionslinie nach einem oder mehreren der vorstehenden Ansprüche, wobei der Roboterkopf einen Auswerfer (5.6) zum Auswerfen der Rollen aus dem Roboterkopf umfasst.

6. Produktionslinie nach einem oder mehreren der vorstehenden Ansprüche, wobei jede der der ersten und der zweiten Spindel (3.3, 3.4) eine Bremse (3.12, 3.13) zum Abbremsen der Drehung der jeweiligen Spindel umfasst.

7. Produktionslinie (1) nach einem oder mehreren der vorstehenden Ansprüche, wobei der erste Abwickler ein Schneid- und Spleißelement (21) umfasst, das ausgelegt ist, ein bahnförmiges Material zu schneiden, das von einer aufgebrauchten Rolle stammt, die auf dem ersten oder dem zweiten Dorn angeordnet ist, wobei eine Hinterkante des bahnförmigen Materials gebildet und diese Hinterkante an eine Vorderkante eines bahnförmiges Materials einer neuen Rolle gespleißt wird, die auf der anderen der ersten und zweiten Spindel angeordnet ist.

8. Produktionslinie nach Anspruch 7,wobei das Schneid- und Spleißelement eine Schneidklinge (21.1) und eine Andruckrolle (21.2) umfasst.

9. Produktionslinie (1) nach einem oder mehreren der vorstehenden Ansprüche, wobei der erste Abwickler einen Klebstoffapplikator (31) zum gegenseitigen Zusammenführen einer Hinterkante eines bahnförmigen Materials, das von einer bald aufgebrauchten Rolle kommt, und einer Vorderkante eines bahnförmigen Materials, das von einer neuen Rolle kommt.

10. Produktionslinie (1) nach Anspruch 9, wobei der Klebstoffapplikator (31) aus der Gruppe ausgewählt ist, die umfasst: einen Flüssigklebstoffspender; einen doppelseitigen Klebebandapplikator.

11. Produktionslinie (1) nach einem oder mehreren der vorstehenden Ansprüche, wobei der erste Abwickler eine Vorrichtung (3.15) zum Detektieren einer Vorderkante einer neuen Rolle umfasst.

12. Produktionslinie (1) nach Anspruch 11, wobei, um die Vorderkante der neuen Rolle zu detektieren, diese neue Rolle auf einer der ersten und zweiten Spindeln (3.3, 3.4) montiert oder vom Roboterkopf (5) gestützt ist.

13. Produktionslinie nach einem oder mehreren der vorstehenden Ansprüche, wobei Roboterkopf (5) eine Aufnahmespindel (5.7) umfasst, die ausgelegt ist, in ein Loch einer zu handhabenden Rolle eingeführt zu werden, sowie eine Zentriervorrichtung zum Zentrieren des Kopfes in Bezug auf ein Loch einer aufzunehmenden Rolle.

14. Produktionslinie (1) nach einem oder mehreren der vorstehenden Ansprüche, wobei der Roboterkopf einen Sensor umfasst, vorzugsweise einen Gewichtssensor, zum Detektieren der Anzahl der vom Roboterkopf in Einsatz genommenen Rollen.

15. Produktionslinie (1) nach einem oder mehreren der vorstehenden Ansprüche, umfassend einen zweiten Abwickler mit einer zweiten Drehvorrichtung, an der ein dritter Dorn und ein vierter Dorn angeordnet sind; wobei die zweite Drehvorrichtung ausgelegt ist, sich um eine zweite Drehachse zu drehen, um die Position des dritten Dorns und des vierten Dorns zu vertauschen; wobei der erste Abwickler und der zweite Abwickler nahe beieinander, d. h. nebeneinander, angeordnet sind, so dass sie beide vom Roboter geladen werden können; und wobei der erste Abwickler und der zweite Abwickler vorzugsweise einander entsprechen.

## Revendications

1. Une ligne (1) pour la production de tubes constitués d'un matériau de type bande, cette ligne comprenant :
un enrouleur de noyau (9) ;
au moins un premier dérouleur (3) comprenant un dispositif tournant (3.2) sur lequel une première broche (3.3) et une deuxième broche (3.4) sont agencées ; le premier dérouleur étant agencé en amont de l'enrouleur de noyau (9) le long d'un parcours d'apport d'un matériau de type bande à l'enrouleur de noyau ; le dispositif tournant du premier dérouleur étant apte à tourner autour d'un axe de rotation (3A) pour échanger les positions du premier mandrin et du deuxième mandrin,
cette ligne étant **caractérisée par** un robot (5) apte à charger des bobines (B1, B2, ... Bn) de matériau de type bande sur le premier dérouleur et à retirer les bobines épuisées du premier dérouleur ; le robot comprenant une tête (5.5) apte à venir en prise avec les bobines d'une pile de bobines en attente et à les transférer à la première broche ou à la deuxième broche et à saisir des bobines épuisées depuis la première broche ou depuis la deuxième broche.

2. La ligne selon la revendication 1, dans laquelle le robot comprend un bras anthropomorphe (5.2, 5.3, 5.4) avec une pluralité d'axes de rotation.

3. La ligne selon la revendication 1 ou 2, dans laquelle chacune desdites première et deuxième broches comprend un éjecteur (3.5, 3.6) pour éjecteur les bobines épuisées de la broche.

4. La ligne (1) selon l'une ou plusieurs des revendications précédentes, comprenant en outre une station de préhension (19), dans laquelle une pile (P) de bobines en attente (B1, B2, ... Bn) est positionnée avec son axe orienté verticalement ; et dans laquelle le robot est apte à faire tourner des bobines prises dans la pile, d'une position horizontale, avec l'axe orienté dans une direction verticale, à une position verticale, avec l'axe orienté dans une direction horizontale et coaxiale avec l'axe de la broche.

5. La ligne selon l'une ou plusieurs des revendications précédentes, dans laquelle la tête de robot comprend un éjecteur (5.6) pour éjecter les bobines de la tête de robot.

6. La ligne selon l'une ou plusieurs des revendications précédentes, dans laquelle chacune desdites première et deuxième broches (3.3, 3.4) comprend un frein (3.12, 3.13) pour freiner la rotation de la broche respective.

7. La ligne (1) selon l'une ou plusieurs des revendications précédentes, dans laquelle le premier dérouleur comprend un organe de coupe et de raccordement (21) apte à couper un matériau de type bande provenant d'une bobine épuisée agencée sur l'un desdits premier mandrin et deuxième mandrin, formant ainsi un bord arrière de matériau de type bande et à raccorder le bord arrière à un bord avant d'un matériau de type bande d'une nouvelle bobine agencée sur l'autre desdites première et deuxième broches.

8. La ligne selon la revendication 7, dans laquelle l'organe de coupe et de raccordement comprend une lame de coupe (21.1) et un rouleau de pression (21.2).

9. La ligne (1) selon l'une ou plusieurs des revendications précédentes, dans laquelle le premier dérouleur comprend un applicateur d'adhésif (31) pour la jonction mutuelle entre un bord arrière d'un matériau de type bande provenant d'un bobine sur le point d'être épuisée et un bord avant d'un matériau de type bande provenant d'une nouvelle bobine.

10. La ligne (1) selon la revendication 9, dans laquelle l'applicateur d'adhésif (31) est choisi dans le groupe comprenant : un distributeur d'adhésif liquide et un applicateur de bande adhésive double-face.

11. La ligne (1) selon l'une ou plusieurs des revendications précédentes, dans laquelle le premier dérouleur comprend un dispositif (3.15) pour détecter un bord avant d'une nouvelle bobine.

12. La ligne (1) selon la revendication 11, dans laquelle, dans le but de détecter le bord avant, ladite nouvelle bobine est installée sur l'une desdites première et deuxième bobines (3.3, 3.4) où elle est supportée par la tête de robot (5).

13. La ligne selon l'une ou plusieurs des revendications précédentes, dans laquelle la tête de robot (5) comprend une broche de préhension (5.7) apte à être insérée dans un trou d'une bobine à manipuler et un dispositif de centrage pour centrer la tête par rapport à un trou d'une bobine à saisir.

14. La ligne (1) selon l'une ou plusieurs des revendications précédentes, dans laquelle la tête de robot comprend un capteur, de préférence un capteur de poids, pour déterminer le nombre de bobines en prise avec la tête de robot.

15. La ligne (1) selon l'une ou plusieurs des revendications précédentes, comprenant un deuxième dérouleur ayant un deuxième dispositif tournant, sur lequel un troisième mandrin et un quatrième mandrin sont agencés ; le deuxième dispositif tournant étant apte à tourner autour d'un deuxième axe de rotation pour échanger les positions du troisième mandrin et du quatrième mandrin ; le premier dérouleur et le deuxième dérouleur étant placés à proximité l'un de l'autre, c'est-à-dire côte à côte, de sorte qu'ils puissent tous les deux être chargés par le robot ; et dans lequel le premier dérouleur et le deuxième dérouleur sont de préférence égaux l'un à l'autre.
